# EUROPEAN PATENT APPLICATION

(11) **EP 2 821 899 A2**
(43) Date of publication of application: **07.01.2015**
(21) Application number: 14175367.3
(22) Date of filing: 02.07.2014
(51) Int. Cl.: G06F 3/041

(54) **Method of controlling touch and electronic device thereof**

(30) Priority: 03.07.2013 KR 20130077894
(71) Applicant: Samsung Electronics Co., Ltd, Gyeonggi-do 443-742 (KR)
(72) Inventor: Cho, Young-Ho, Seoul (KR)
(74) Representative: Nederlandsch Octrooibureau

(57) **Abstract**

A device and a method for controlling a touch event in an electronic device are provided. The method include receiving at least one touch event occurring in a touch panel unit; recognizing that a ghost touch has occurred based on time information and coordinate information of the received at least one touch event; and performing at least one of initialization or calibration of the touch panel unit, when recognizing that a ghost touch has occurred.

## Description

### BACKGROUND OF THE INVENTION

### 1. Field of the Invention

The present disclosure generally relates to a method of controlling a touch and an electronic device thereof.

### 2. Description of the Related Art

Due to easy portability, electronic devices are widely used and have become a multimedia device that provides various services such as an audio dedicated communication function, an audiovisual communication function, an information input and output function, and a data transmission and reception function.

As described above, as the electronic device provides a multimedia service, the information amount to process and the information amount to display in the electronic device have increased. Accordingly, by improving space usage, interests in an electronic device having a touch screen that can increase a size of a display unit have increased.

A touch screen is an input and display device that performs an input and a display of information in a single screen. Accordingly, when using a touch screen in the electronic device, by removing a separate input device such as a keypad, the electronic device can increase a display area. For example, when using a full touch method that applies a touch screen to an entire screen, by using an entire surface of the electronic device as a screen, a screen size may be enlarged.

A touch input method of the electronic device having a touch screen may include a resistive touch method and a capacitive touch method. When using a capacitive touch method, the electronic device may detect a capacitance change through a touch screen and determine a touch coordinate.

As described above, when using a capacitive touch method, the electronic device operates according to an capacitance change through a touch screen, and thus there is a problem that may recognize that a touch input has occurred when capacitance changes in addition to a direct touch input of an electronic device user. That is, in the electronic device having a touch screen, there is a problem that a ghost touch occurs. Wherein the ghost touch is unintended touch.

### SUMMARY OF THE INVENTION

The present disclosure has been made to solve at least the above-mentioned problems and/or disadvantages and to provide at least the advantages described below. Accordingly, an aspect of the present disclosure is to provide a device and a method for controlling a touch event in an electronic device.

Another aspect of the present disclosure is to provide a device and a method for detecting a ghost touch in an electronic device.

Another aspect of the present disclosure is to provide a device and a method for removing a ghost touch in an electronic device.

Another aspect of the present disclosure is to provide a device and a method for removing a ghost touch by performing initialization of a touch panel unit in an electronic device.

Another aspect of the present disclosure is to provide a device and a method for removing a ghost touch by performing calibration of a touch panel unit in an electronic device.

In accordance with an aspect of the present disclosure, a method of controlling a touch event in an electronic device is provided. The method includes receiving at least one touch event occurring in a touch panel unit; recognizing that a ghost touch has occurred based on time information and coordinate information of the received at least one touch event; and performing at least one of initialization or calibration of the touch panel unit, when recognizing that a ghost touch has occurred.

In accordance with another aspect of the present disclosure, an electronic device is provided, which includes at least one processor; at least one memory; at least one touch panel unit; and at least one program stored in the at least one memory and to be executed by the at least one processor, wherein the processor is configured to receive at least one touch event occurring at the touch panel unit, to recognize that a ghost touch has occurred based on time information and coordinate information about the at least one touch event, and to perform at least one of initialization or calibration of the touch panel unit, when recognizing that a ghost touch has occurred.

### BRIEF DESCRIPTION OF THE DRAWINGS

The above and other aspects, features and advantages of certain exemplary embodiments of the present disclosure will be more apparent from the following detailed description, taken in conjunction with the accompanying drawings, in which:
FIG. 1 is a block diagram illustrating a configuration of an electronic device according to an embodiment of the present disclosure;
FIG. 2 is a block diagram illustrating a configuration of a processor according to an embodiment of the present disclosure;
FIG. 3 is a flowchart illustrating a process of detecting and removing a ghost touch in an electronic device according to an embodiment of the present disclosure;
FIG. 4 is a flowchart illustrating a process of detecting and removing a ghost touch in an electronic device according to an embodiment of the present disclosure;
FIG. 5 is a flowchart illustrating a process of detecting and removing a ghost touch in an electronic device according to an embodiment of the present disclosure;
FIG. 6 is a flowchart illustrating a process of detecting and removing a ghost touch in an electronic device according to an embodiment of the present disclosure;
FIG. 7 is a flowchart illustrating a process of detecting and removing a ghost touch in an electronic device according to an embodiment of the present disclosure;
FIG. 8 is a flowchart illustrating a process of detecting and removing a ghost touch in an electronic device according to an embodiment of the present disclosure;
FIG. 9 is a flowchart illustrating a process of detecting and removing a ghost touch in an electronic device according to an embodiment of the present disclosure; and
FIG. 10 is a diagram illustrating an edge area and a non-edge area of a touch screen in an electronic device according to an embodiment of the present disclosure.

### DETAILED DESCRIPTION OF EMBODIMENTS OF THE PRESENT

### INVENTION

Hereinafter, embodiments of the present disclosure will be described with reference to the accompanying drawings. Detailed descriptions of well-known functions and structures incorporated herein may be omitted to avoid obscuring the subject matter of the present disclosure. Also, the terms used herein are defined according to the functions of the present disclosure. Thus, the terms may vary depending on a user's or an operator's intention and usage. That is, the terms used herein must be understood based on the descriptions made herein.

Various embodiments relate to technology that detects and removes a ghost touch in an electronic device having a touch screen.

In the following description, an electronic device having a touch screen may include a mobile communication terminal, a Personal Digital Assistant (PDA), a laptop computer, a smart phone, a netbook computer, a television, a Mobile Internet Device (MID), a Ultra Mobile Personal Computer (UMPC), a tablet personal computer, a navigation device, a digital refrigerator, a digital clock, and a Moving Picture Experts Group layer-3 (MP3) player.

In the following description, a touch event may include at least one of a touch press, a touch release, and a touch move.

In the following description, coordinate information of a touch may include a coordinate corresponding to at least one touch event of a touch press, a touch release, and a touch move. For example, it may be assumed that an action of detecting a first touch input through a touch panel unit is a touch press and an action of detecting input release of press is a touch release. Further, at a reference time before a touch release is detected after a touch press is detected, a touch move may be detected. Further, the electronic device may determine whether a ghost touch occurs in a superordinate stage than that of firmware.

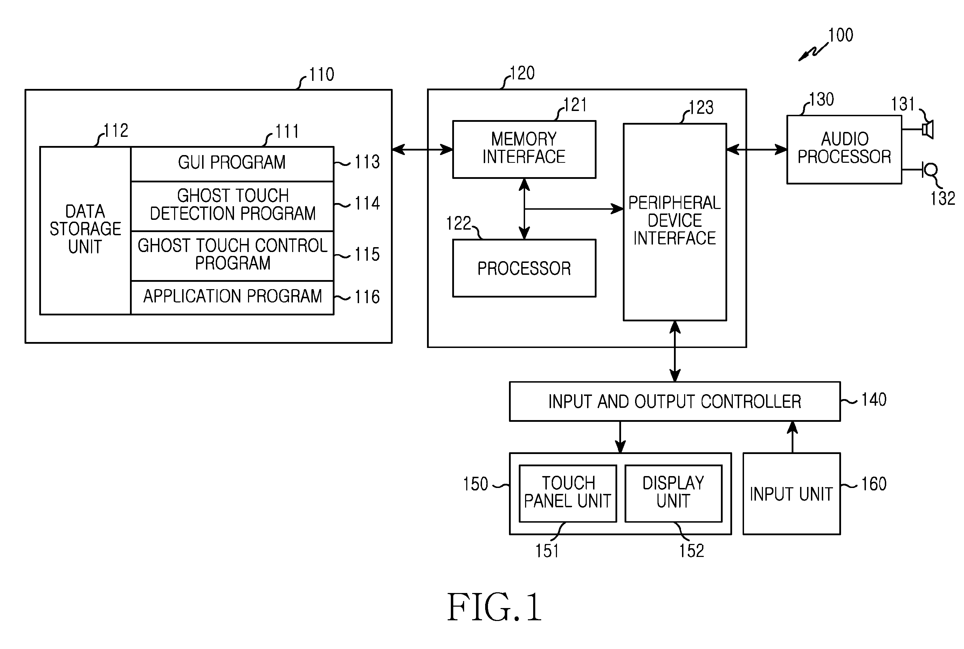

FIG. 1 is a block diagram illustrating a configuration of an electronic device according to an embodiment of the present disclosure.

As shown in FIG. 1, an electronic device 100 may include a memory 110, a processor unit 120, an audio processor 130, an input and output controller 140, a touch screen 150, and an input unit 160. Here, the memory 110 may exist in plural.

The memory 110 may includes a program storage unit 111 that stores a program for controlling operations of the electronic device 100 and a data storage unit 112 that stores data generated while performing a program. The program storage unit 111 may include a Graphical User Interface (GUI) program 113, a ghost touch detection program 114, a ghost touch control program 115, and at least one application program 116. Here, a program included in the program storage unit 111 may be represented by an instruction set in a set of instructions. The data storage unit 112 may store reference information for detecting a ghost touch. Here, reference information may include time information and coordinate information corresponding to at least one event occurring in the touch panel unit 151.

The GUI program 113 may include at least one software component for providing a user interface with graphics to a display unit 152. For example, the GUI program 113 may control to display application program information driven by a processor 122 in the display unit 152.

The ghost touch detection program 114 may include at least one software component that detects a ghost touch that has occurred in the touch screen 150. For example, when a touch input is detected through the touch panel unit 151, the ghost touch detection program 114 may determine whether a touch coordinate of a first time point and a touch coordinate of a second time point are included in a reference range. In this case, the ghost touch detection program 114 may compare at least two touch coordinates input at a continuous time point. When a touch input form is a hopping form in which a touch press and a touch release are repeatedly detected, the ghost touch detection program 114 may determine whether a ghost touch has occurred through a comparison of the number of hopping times and a reference number. When a touch release is not detected after a touch press is detected, the ghost touch detection program 114 may determine whether a ghost touch has occurred through a comparison of a press holding time and a reference time. Further, the ghost touch detection program 114 may compare touch coordinates of a touch move detected at a predetermined time after a touch press is detected and determine whether a ghost touch has occurred.

The ghost touch control program 115 may include at least one software component that removes a ghost touch that has occurred on the touch screen 150. For example, the ghost touch control program 115 may perform initialization or calibration of the touch panel unit 151 to remove a ghost touch. As another example, the ghost touch control program 115 may intercept power supply of the touch panel unit 151 and supply power again to remove an entire touch input detected through the touch panel unit 151.

The application program 116 may include a software component of at least one application program installed in the electronic device 100.

The processor unit 120 may include a memory interface 121, at least one processor 122, and a peripheral device interface 123. Here, the memory interface 121, the at least one processor 122, and the peripheral interface 123 included in the processor unit 120 may be integrated into at least one integrated circuit or may be implemented with a separate constituent element.

The memory interface 121 may control a constituent element such as the processor 122 or the peripheral device interface 123 to access to the memory 110.

The peripheral device interface 123 may control a connection of the memory interface 121, the processor 122, and an input and output peripheral device of the electronic device 100.

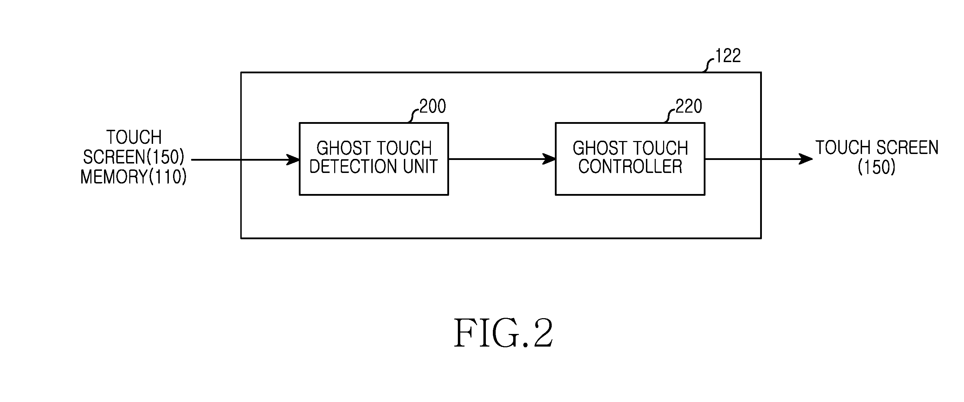

The processor 122 may control the electronic device 100 to provide various services using at least one software program. In this case, by executing at least one program stored at the memory 110, the processor 122 may control to provide a service according to a corresponding program. For example, by executing the ghost touch detection program 114, the processor 122 may control to provide a service in order to detect a ghost touch that has occurred in the touch screen 150; and by executing the ghost touch control program 115, the processor 122 may control to provide a service in order to remove a ghost touch that has occurred in the touch screen 150, In this case, the processor 122 may have a configuration as shown in FIG. 2.

The audio processor 130 may provide an audio interface between a user and the electronic device 100 through a speaker 131 and a microphone 132.

The input and output controller 140 may provide an interface between the peripheral device interface 123 and an input and output device such as the touch screen 150 and the input unit 160.

The touch screen 150 may include a touch panel unit 151 and a display unit 152.

The touch panel unit 151 may provide time information and coordinate information corresponding to a touch event to the processor unit 120 through the input and output controller 140. For example, it may be assumed that an action in which the touch panel unit 151 first detects an input of a touch event is a touch press and an action in which the touch panel unit 151 detects a release of the press is a touch release. Further, the touch panel unit 151 may detect a touch move at a reference time before a touch release is detected after a touch press is detected.

The display unit 152 may display state information of the electronic device 100, a character input by a user, a moving picture, and a still picture. For example, the display unit 152 may display application program information driven by the processor 122.

The input unit 160 may provide input data generated by a user's selection to the processor unit 120 through the input and output controller 140.

The electronic device 100 may further include a communication unit for performing a communication function for audio communication and data communication. In this case, the communication unit may be divided into a plurality of communication sub-modules that support different communication networks. For example, the communication network may include a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless LAN (WLAN), a Bluetooth network, and a Near Field Communication (NFC) network, but is not limited thereto.

FIG. 2 is a block diagram illustrating a configuration of a processor according to an embodiment of the present disclosure.

As shown in FIG. 2, the processor 122 may include a ghost touch detection unit 200 and a ghost touch controller 220.

By executing the ghost touch detection program 114 included in the program storage unit 111, the ghost touch detection unit 200 may control to detect a ghost touch occurring in the touch screen 150. For example, when a touch input is detected through the touch panel unit 151, the ghost touch detection unit 200 may determine whether a touch coordinate of a first time point and a touch coordinate of a second time point are included in a reference range. In this case, the ghost touch detection unit 200 may compare at least two touch coordinates input at a continuous time point. When a touch input form is a hopping form in which a touch press and a touch release are repeatedly detected, the ghost touch detection unit 200 may determine whether a ghost touch has occurred through a comparison of the number of hopping times and a reference number. When a touch release is not detected after a touch press is detected, the ghost touch detection unit 200 may determine whether a ghost touch has occurred through a comparison of a press holding time and a reference time. Further, the ghost touch detection unit 200 compares touch coordinates of a touch move that detects at a predetermined time after press is detected, thereby determining whether a ghost touch has occurred.

By executing the ghost touch control program 115 included in the program storage unit 111, the ghost touch controller 220 may control to remove the ghost touch that has occurred on the touch screen 150. For example, by performing initialization or calibration of the touch panel unit 151, the ghost touch controller 220 may remove the ghost touch. As another example, the ghost touch controller 220 may intercept power supply of the touch panel unit 151 and supply power again to remove an entire touch input detected through the touch panel unit 151.

The electronic device may include a separate ghost touch detection module including the ghost touch detection program 114.

The electronic device may include a separate ghost touch detection module including the ghost touch control program 114.

According to an embodiment of the present disclosure, the electronic device may include at least one processor, at least one memory, at least one touch panel unit, and at least one program stored at the memory and to be executed by at least one processor, and the processor may receive at least one touch event occurring at the touch panel unit, recognize that a ghost touch has occurred based on time information and coordinate information of at least one touch event, and perform at least one of initiation or calibration of the touch panel unit, when recognizing that a ghost touch has occurred.

According to an embodiment of the present disclosure, the initialization may include re-booting of an Integrated Circuit (IC) included in the touch panel unit.

According to an embodiment of the present disclosure, when a repeated input of a touch press and a touch release is detected, the processor may recognize that the ghost touch has occurred based on the number of times in which the touch press and the touch release are repeatedly input.

According to an embodiment of the present disclosure, after a touch press input is detected, when a touch release input is not detected, the processor may recognize that the ghost touch has occurred based on a time in which the touch press input is maintained.

According to an embodiment of the present disclosure, after a touch press input is detected, when a repeated input of a touch move is detected, the processor may recognize that the ghost touch has occurred based on the number of times in which the touch move is repeatedly input.

According to an embodiment of the present disclosure, the processor may determine whether coordinate information about at least one touch event is included in an edge area of the touch panel unit.

According to an embodiment of the present disclosure, when coordinate information corresponding to at least one event is included in an edge area of the touch panel unit, the processor may differently set a reference that recognizes that a ghost touch has occurred in a non-edge area of the touch panel unit and a reference that recognizes that a ghost touch has occurred in an edge area of the touch panel unit.

According to an embodiment of the present disclosure, the processor may recognize that a ghost touch has occurred in a superordinate stage than that of firmware.

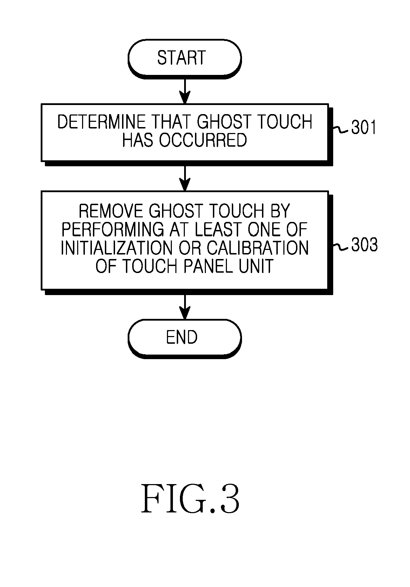

FIG. 3 is a flowchart illustrating a process of detecting and removing a ghost touch in an electronic device according to an embodiment of the present disclosure.

Referring to FIG. 3, the electronic device determines that a ghost touch has occurred in step 301. For example, when a touch input is detected through the touch panel unit 151, the electronic device may determine whether a touch coordinate of a first time point and a touch coordinate of a second time point are included in a reference range. In this case, the electronic device may compare at least two touch coordinates input at a continuous time point. When a touch input form is a hopping form in which a touch press and a touch release are repeatedly detected, the electronic device may determine whether a ghost touch has occurred through a comparison of the number of hopping times and a reference number. When a touch release is not detected after a touch press is detected, the electronic device may determine whether a ghost touch has occurred through a comparison of a press holding time and a reference time. Further, by comparing touch coordinates of a touch move detected at a predetermined time after a touch press is detected, the electronic device may determine whether a ghost touch has occurred.

The electronic device performs initialization or calibration of the touch panel unit 151 to remove the ghost touch in step 303. For example, by intercepting power supply of the touch panel unit 151 and supplying power again, the electronic device may remove an entire touch input detected through the touch panel unit 151.

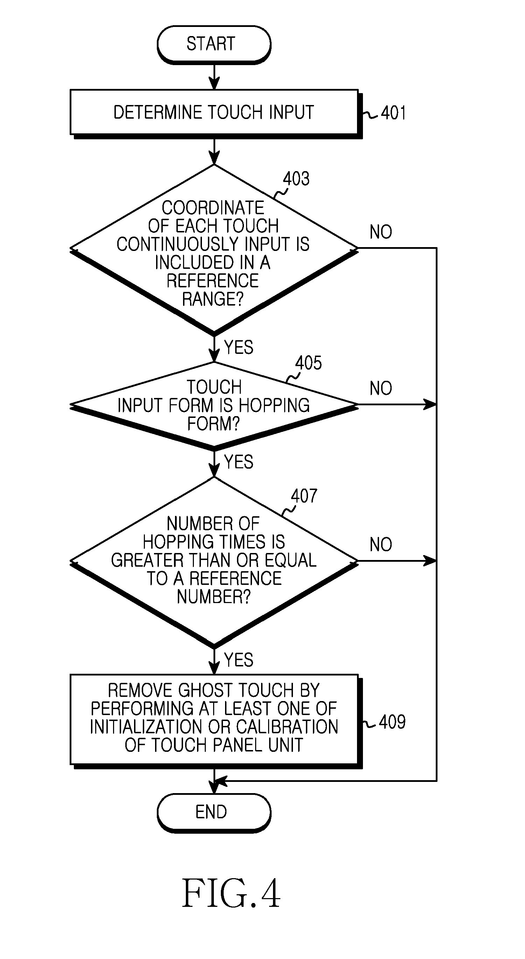

FIGS. 4 is a flowchart illustrating a process of detecting and removing a ghost touch in an electronic device according to an embodiment of the present disclosure.

Referring to FIG. 4, the electronic device may determine a touch input in step 401. For example, when a touch input is detected through the touch panel unit 151, the electronic device may determine a coordinate of the input touch. Here, a touch coordinate may include a coordinate corresponding to a touch input of at least one of a touch press, a touch release, and a touch move.

The electronic device may determine whether a coordinate of each touch continuously input is included in a reference range in step 403. For example, the electronic device may determine whether a touch coordinate of a first time point and a touch coordinate of a second time point are included in a reference range. In this case, the electronic device may compare at least two touch coordinates input at a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch input form is a hopping form in step 405. For example, the electronic device may determine whether a touch press and a touch release are repeatedly detected through the touch panel unit 151.

If a touch input form is not a hopping form, the electronic device may terminate the procedure.

If a touch input form is a hopping form, the electronic device may determine whether the number of hopping times is greater than or equal to a reference number in step 407. For example, the electronic device may determine whether a ghost touch has occurred through a comparison of the number of hopping times and a reference number.

If the number of hopping times is less than the reference number, the electronic device may recognize that a ghost touch has not occurred. Accordingly, the electronic device may terminate the procedure.

If the number of hopping times is greater than or equal to the reference number, the electronic device may recognize that a ghost touch has occurred and removes the ghost touch by performing at least one of initialization or calibration of the touch panel unit 151 in step 409. For example, the electronic device may intercept power supply of the touch panel unit 151 and supply power again to remove an entire touch input detected through the touch panel unit 151.

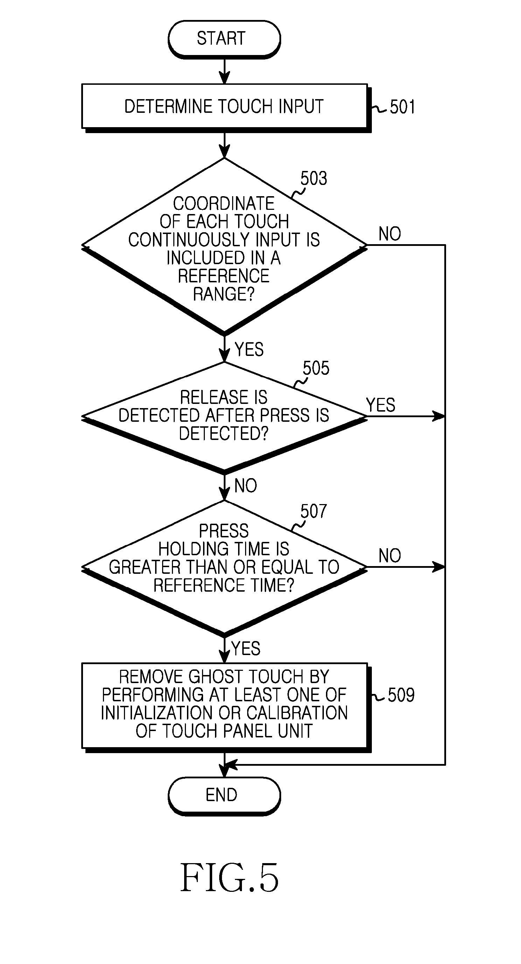

FIGS. 5 is a flowchart illustrating a process of detecting and removing a ghost touch in an electronic device according to an embodiment of the present disclosure.

Referring to FIG. 5, the electronic device may determine a touch input in step 501. For example, when a touch input is detected through the touch panel unit 151, the electronic device may determine a coordinate of the input touch. Here, the touch coordinate may include a coordinate corresponding to a touch input of at least one of a touch press, a touch release, and a touch move.

The electronic device may determine whether a coordinate of each touch continuously input is included in a reference range in step 503. For example, the electronic device may determine whether a touch coordinate of a first time point and a touch coordinate of a second time point are included in a reference range. In this case, the electronic device may compare at least two touch coordinates input to a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch release is detected after a touch press is detected in step 505.

If a touch release is detected after a touch press is detected, the electronic device may terminate the procedure.

If a touch release is not detected after a touch press is detected, the electronic device may determine whether a press holding time is greater than or equal to a reference time in step 507. For example, the electronic device may determine whether a ghost touch has occurred through a comparison of a press holding time and a reference time.

If a press holding time is less than a reference time, the electronic device may recognize that a ghost touch has not occurred. Accordingly, the electronic device may terminate the procedure.

If a press holding time is greater than or equal to a reference time, the electronic device may recognize that a ghost touch has occurred and removes the ghost touch by performing at least one of initialization or calibration of the touch panel unit 151 in step 509. For example, the electronic device may intercept power supply of the touch panel unit 151 and supply power again to remove an entire touch input detected through the touch panel unit 151.

The electronic device may further compare touch coordinates of a touch move that detects at a predetermined time after a touch press is detected and determine whether a ghost touch has occurred. For example, when touch coordinates of a touch move are included in a reference range, the electronic device may determine that a ghost touch has occurred.

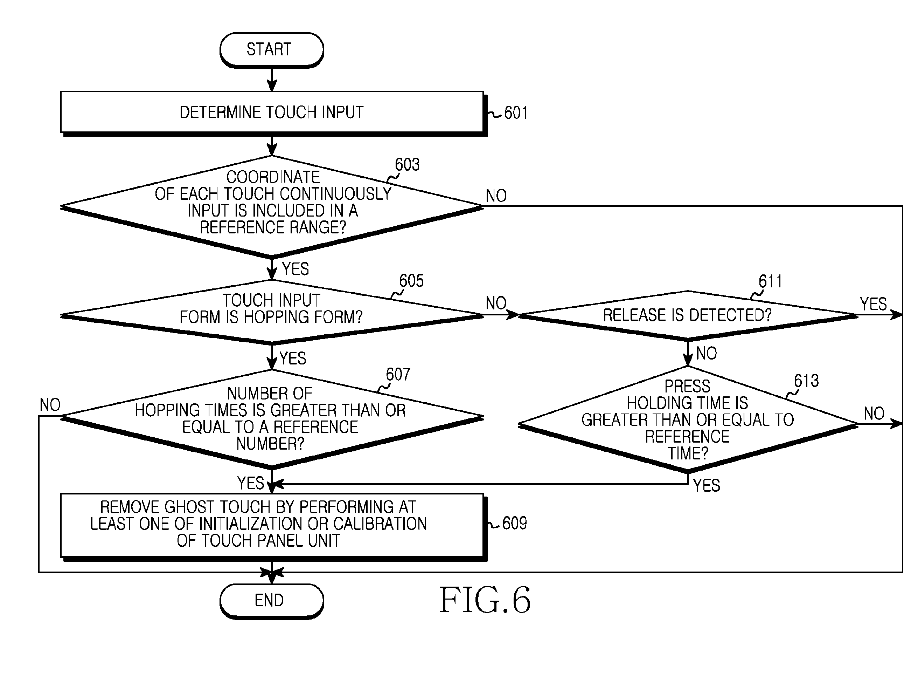

FIGS. 6 is a flowchart illustrating a process of detecting and removing a ghost touch in an electronic device according to an embodiment of the present disclosure.

Referring to FIG. 6, the electronic device may determine a touch input in step 601. For example, when a touch input is detected through the touch panel unit 151, the electronic device may determine a coordinate of the input touch. Here, a touch coordinate may include a coordinate corresponding to a touch input of at least one of a touch press, a touch release, and a touch move.

The electronic device may determine whether a coordinate of each touch continuously input is included in a reference range in step 603. For example, the electronic device may determine whether a touch coordinate of a first time point and a touch coordinate of a second time point are included in a reference range. In this case, the electronic device may compare at least two touch coordinates input at a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch input form is a hopping form in step 605. For example, the electronic device may determine whether a touch press and a touch release are repeatedly detected through the touch panel unit 151.

If a touch input form is a hopping form, the electronic device may determine whether the number of hopping times is greater than or equal to a reference number in step 607. For example, the electronic device may determine whether a ghost touch has occurred through a comparison of the number of hopping times and the reference number.

If the number of hopping times is less than the reference number, the electronic device recognizes that a ghost touch has not occurred. Accordingly, the electronic device may terminate the procedure.

If the number of hopping times is greater than or equal to the reference number, the electronic device may recognize that a ghost touch has occurred and removes the ghost touch by performing at least one of initialization or calibration of the touch panel unit 151 in step 609. For example, the electronic device may intercept power of the touch panel unit 151 and supply power again to remove an entire touch input detected through the touch panel unit 151.

If a touch input form is not a hopping form in step 605, the electronic device may determine whether a touch release is detected in step 611.

If a touch release is detected, the electronic device may terminate the procedure.

If a touch release is not detected, the electronic device may determine whether a press holding time is greater than or equal to a reference time in step 613. For example, the electronic device may determine whether a ghost touch has occurred through a comparison of a press holding time and a reference time.

If a press holding time is less than a reference time, the electronic device may recognize that a ghost touch has not occurred. Accordingly, the electronic device terminates the procedure.

By comparing touch coordinates of a touch move detected at a predetermined time after a touch press is detected, the electronic device may further determine whether a ghost touch has occurred. For example, when touch coordinates of move are included in a reference range, the electronic device may determine that a ghost touch has occurred.

If a press holding time is greater than or equal to a reference time instep 613, the electronic device may recognize that a ghost touch has occurred and removes the ghost touch by performing at least one of initialization or calibration of the touch panel unit 151 in step 609.

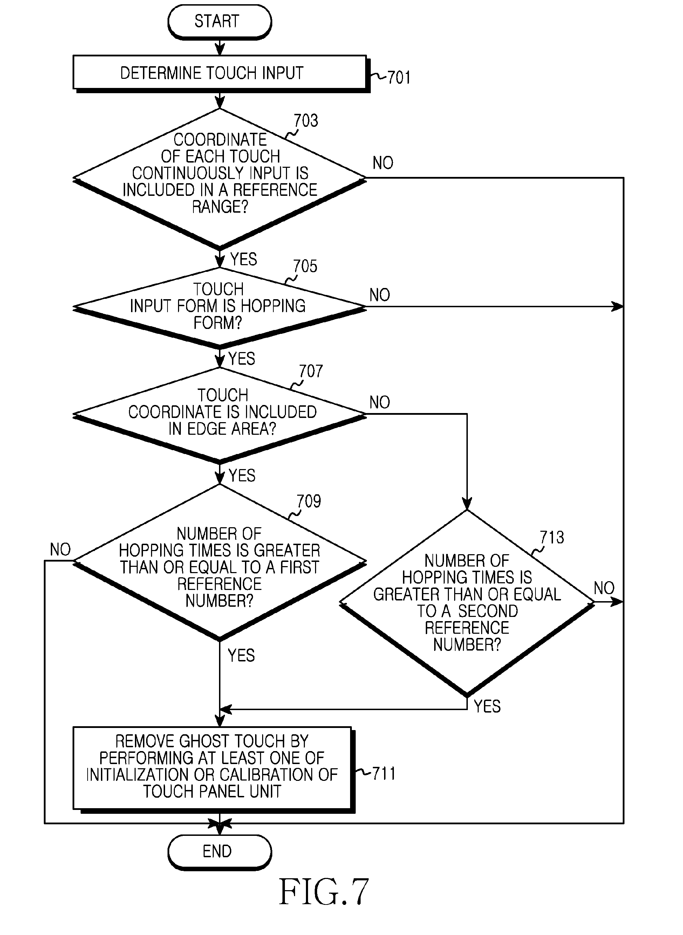

FIGS. 7 is a flowchart illustrating a process of detecting and removing a ghost touch in an electronic device according to an embodiment of the present disclosure.

Referring to FIG. 7, the electronic device may determine a touch input in step 701. For example, when a touch input is detected through the touch panel unit 151, the electronic device may determine a coordinate of the input touch. Here, a touch coordinate may include a coordinate corresponding to a touch input of at least one of a touch press, a touch release, and a touch move.

The electronic device may determine whether a coordinate of each touch continuously input is included in a reference range in step 703. For example, the electronic device may determine whether a touch coordinate of a first time point and a touch coordinate of a second time point are included in a reference range. In this case, the electronic device may compare at least two touch coordinates input at a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch input form is a hopping form in step 705. For example, the electronic device may determine whether a touch press and a touch release are repeatedly detected through the touch panel unit 151.

If a touch input form is not a hopping form, the electronic device may terminate the procedure.

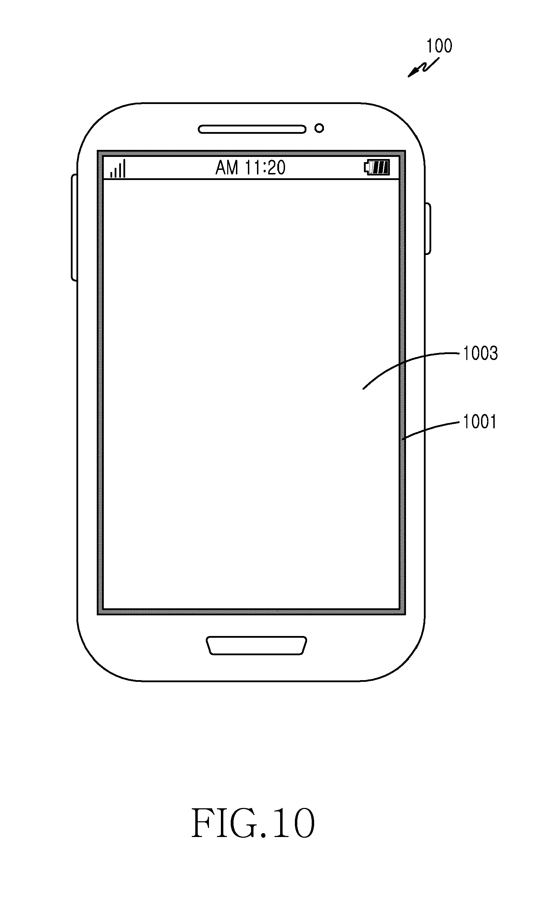

If a touch input form is a hopping form, the electronic device may determine whether a touch coordinate is included in an edge area in step 707. For example, the electronic device may determine whether a touch coordinate is included in an edge area 1001 or in a non-edge area 1003, as shown in FIG. 10.

If a touch coordinate is included in an edge area 1001, the electronic device may determine whether the number of hopping times is greater than or equal to the first reference number in step 709. For example, the electronic device may determine whether a ghost touch has occurred through a comparison of the hopping number of hopping times and the first reference number.

If the number of hopping times is less than the first reference number, the electronic device may recognize that a ghost touch has not occurred. Accordingly, the electronic device may terminate the procedure.

If the number of hopping times is greater than or equal to the first reference number, the electronic device may recognize that a ghost touch has occurred and removes the ghost touch by performing at least one of initialization or calibration of the touch panel unit 151 in step 711. For example, the electronic device may intercept power supply of the touch panel unit 151 and supply power again to remove an entire touch input detected through the touch panel unit 151.

If a touch coordinate is not included in the edge area 1001, i.e., if a touch coordinate is included in the non-edge area 1003, the electronic device may determine whether the number of hopping times is greater than or equal to the second reference number in step 713. For example, the electronic device may determine whether a ghost touch has occurred through a comparison of the hopping number of hopping times and the second reference number. If the hopping number of times is less than the second reference number, the electronic device may recognize that a ghost touch has not occurred. Accordingly, the electronic device may terminate the procedure.

If the number of hopping times is greater than or equal to the second reference number, the electronic device may recognize that a ghost touch has occurred and removes the ghost touch by performing at least one of initialization or calibration of the touch panel unit 151 in step 711. For example, the electronic device may intercept power supply of the touch panel unit 151 and supply power again to remove an entire touch input detected through the touch panel unit 151.

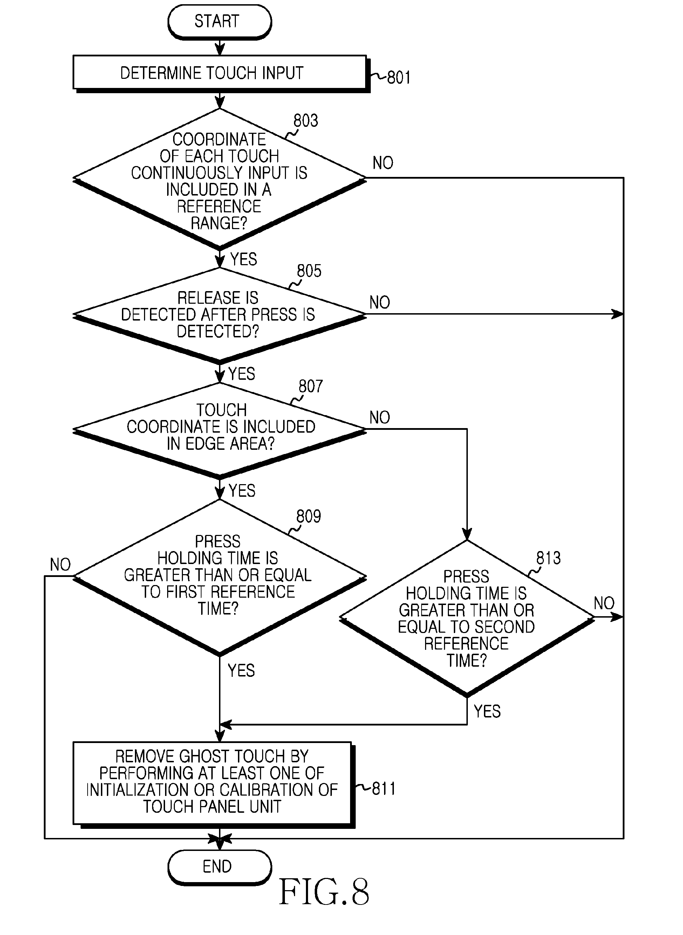

FIGS. 8 is a flowchart illustrating a process of detecting and removing a ghost touch in an electronic device according to an embodiment of the present disclosure.

Referring to FIG. 8, the electronic device may determine a touch input in step 801. For example, when a touch input is detected through the touch panel unit 151, the electronic device may determine a coordinate of the input touch. Here, a touch coordinate may include a coordinate corresponding to a touch input of at least one of a touch press, a touch release, and a touch move.

The electronic device may determine whether a coordinate of each touch continuously input is included in a reference range (803).For example, the electronic device may determine whether a touch coordinate of a first time point and a touch coordinate of a second time point are included in a reference range. In this case, the electronic device may compare at least two touch coordinates input at a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch release is detected after a touch press is detected in step 805.

If a touch release is detected after a touch press is detected, the electronic device may terminate the procedure.

If a touch release is not detected after a touch press is detected, the electronic device may determine whether a touch coordinate is included in an edge area in step 807. For example, the electronic device may determine whether a touch coordinate is included in the edge area 1001 or in the non-edge area 1003, as shown in FIG. 10.

If a touch coordinate is included in the edge area 1001, the electronic device may determine whether a press holding time is greater than or equal to a first reference time in step 809. For example, the electronic device may determine whether a ghost touch has occurred through a comparison of a press holding time and a first reference time.

If a press holding time is less than a first reference time, the electronic device may recognize that a ghost touch has not occurred. Accordingly, the electronic device may terminate the procedure.

If a press holding time is greater than or equal to a first reference time, the electronic device may recognize that a ghost touch has occurred and removes the ghost touch by performing at least one of initialization or calibration of the touch panel unit 151 in step 811. For example, the electronic device may intercept power supply of the touch panel unit 151 and supply power again to remove an entire touch input detected through the touch panel unit 151.

If a touch coordinate is not included in the edge area 1001, i.e., if a touch coordinate is included in the non-edge area 1003, the electronic device may determine whether a press holding time is greater than or equal to a second reference time in step 813. For example, the electronic device may determine whether a ghost touch has occurred through a comparison of a press holding time and a second reference time.

If a press holding time is less than a second reference time, the electronic device may recognize that a ghost touch has not occurred. Accordingly, the electronic device may terminate the procedure.

If a press holding time is greater than or equal to a second reference time, the electronic device may recognize that a ghost touch has occurred and removes the ghost touch by performing at least one of initialization or calibration of the touch panel unit 151 in step 811. For example, the electronic device may intercept power supply of the touch panel unit 151 and supply power again to remove an entire touch input detected through the touch panel unit 151.

The electronic device may further compare touch coordinates of a touch move that detects at a predetermined time after a touch press is detected and determine whether a ghost touch has occurred. For example, when touch coordinates of a touch move are included in a reference range, the electronic device may determine that a ghost touch has occurred.

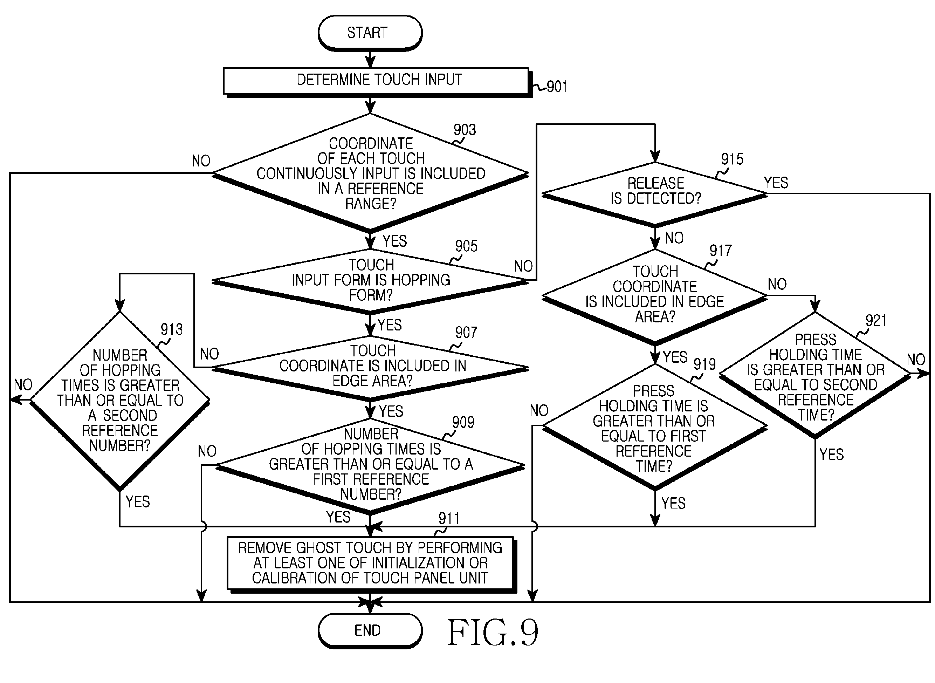

FIGS. 9 is a flowchart illustrating a process of detecting and removing a ghost touch in an electronic device according to an embodiment of the present disclosure.

Referring to FIG. 9, the electronic device may determine a touch input in step 901. For example, when a touch input is detected through the touch panel unit 151, the electronic device may determine a coordinate of the input touch. Here, a touch coordinate may include a coordinate corresponding to a touch input of at least one of a touch press, a touch release, and a touch move.

The electronic device may determine whether a coordinate of each touch continuously input is included in a reference range (903). For example, the electronic device may determine whether a touch coordinate of a first time point and a touch coordinate of a second time point are included in a reference range. In this case, the electronic device may compare at least two touch coordinates input at a continuous time point.

If a coordinate of each touch continuously input is not included in a reference range, the electronic device may recognize a touch input detected through the touch panel unit 151 as a normal touch input. Accordingly, the electronic device may terminate the procedure.

If a coordinate of each touch continuously input is included in a reference range, the electronic device may recognize a touch input detected through the touch panel unit 151 as an abnormal touch input. Accordingly, the electronic device may determine whether a touch input form is a hopping form in step 905. For example, the electronic device may determine whether a touch press and a touch release are repeatedly detected through the touch panel unit 151.

If a touch input form is a hopping form, the electronic device may determine whether a touch coordinate is included in an edge area in step 907. For example, the electronic device may determine whether a touch coordinate is included in the edge area 1001 or in the non-edge area 1003, as shown in FIG. 10.

If a touch coordinate is included in the edge area 1001, the electronic device may determine whether the number of hopping times is greater than or equal to a first reference number in step 909. For example, the electronic device may determine whether a ghost touch has occurred through a comparison of the number of hopping times and the first reference number.

If the number of hopping times is less than the first reference number, the electronic device may recognize that a ghost touch has not occurred. Accordingly, the electronic device may terminate the procedure.

If the number of hopping times is greater than or equal to the first reference number, the electronic device may recognize that a ghost touch has occurred and removes the ghost touch by performing at least one of initialization or calibration of the touch panel unit 151 in step 911. For example, the electronic device may intercept power supply of the touch panel unit 151 and supply power again to remove an entire touch input detected through the touch panel unit 151.

If a touch coordinate is not included in an edge area 1001, i.e., a touch coordinate is included in a non-edge area 1003, in step 907, the electronic device may determine whether the number of hopping times is greater than or equal to the second reference number in step 913. For example, the electronic device may determine whether a ghost touch has occurred through a comparison of the number of hopping times and the second reference number.

If the number of hopping times is less than the second reference number, the electronic device may recognize that a ghost touch has not occurred. Accordingly, the electronic device may terminate the procedure.

If the number of hopping times is greater than or equal to the second reference number, the electronic device may recognize that a ghost touch has occurred and removes the ghost touch by performing at least one of initialization or calibration of the touch panel unit 151 in step 911. For example, the electronic device may intercept power supply of the touch panel unit 151 and supply power again to remove an entire touch input detected through the touch panel unit 151.

If a touch input form is not a hopping form in step 905, the electronic device may determine whether a touch release is detected in step 915.

If a touch release is detected, the electronic device may terminate the procedure.

If a touch release is not detected, the electronic device may determine whether a touch coordinate is included in an edge area in step 917. For example, the electronic device may determine whether a touch coordinate is included in the edge area 1001 or in the non-edge area 1003, as shown in FIG. 10.

If a touch coordinate is included in the edge area 1001, the electronic device may determine whether a press holding time is greater than or equal to a first reference time in step 919. For example, the electronic device may determine whether a ghost touch has occurred through a comparison of a press holding time and a first reference time.

If a press holding time is less than a first reference time, the electronic device may recognize that a ghost touch has not occurred. Accordingly, the electronic device may terminate the procedure.

If a press holding time is greater than or equal to a first reference time, the electronic device may recognize that a ghost touch has occurred and removes the ghost touch by performing at least one of initialization or calibration of the touch panel unit 151 in step 911. For example, the electronic device may intercept power supply of the touch panel unit 151 and supply power again to remove an entire touch input detected through the touch panel unit 151.

If a touch coordinate is not included in an edge area 1001, i.e., a touch coordinate is included in a non-edge area 1003, in step 917, the electronic device may determine whether a press holding time is greater than or equal to a second reference time in step 921. For example, the electronic device may determine whether a ghost touch has occurred through a comparison of a press holding time and a second reference time.

If a press holding time is less than a second reference time, the electronic device may recognize that a ghost touch has not occurred. Accordingly, the electronic device may terminate the procedure.

If a press holding time is greater than or equal to a second reference time, the electronic device may recognize that a ghost touch has occurred and removes the ghost touch by performing at least one of initialization or calibration of the touch panel unit 151 in step 911. For example, the electronic device may intercept power supply of the touch panel unit 151 and supply power again to remove an entire touch input detected through the touch panel unit 151.

The electronic device may further compare touch coordinates of a touch move that detects at a predetermined time after a touch press is detected and determine whether a ghost touch has occurred. For example, when touch coordinates of a touch move are included in a reference range, the electronic device may determine that a ghost touch has occurred.

According to various embodiments of the present disclosure, a method of controlling a touch event in an electronic device may include receiving at least one touch event occurring in a touch panel unit, recognizing that a ghost touch has occurred based on time information and coordinate information of the received at least one touch event, and performing at least one of initialization or calibration of the touch panel unit, when recognizing that a ghost touch has occurred.

According to various embodiments of the present disclosure, the touch event may include at least one of a touch press, a touch release, and a touch move.

According to various embodiments of the present disclosure, the initialization may include re-booting of an IC included in the touch panel unit.

According to various embodiments of the present disclosure, a process of recognizing that a ghost touch has occurred may include a process of recognizing that a ghost touch has occurred based on the number of times in which a touch press and a touch release are repeatedly input, when a repeated input of the touch press and the touch release is detected.

According to various embodiments of the present disclosure, a process of recognizing that a ghost touch has occurred may include a process of recognizing that a ghost touch has occurred based on a time in which a touch press is maintained when a touch release is not detected after the touch press is detected.

According to various embodiments of the present disclosure, a process of recognizing that a ghost touch has occurred may include a process of recognizing that a ghost touch has occurred based on the number of times in which a touch move is repeatedly input, when a repeated input of the touch move is detected after a touch press is detected.

According to various embodiments of the present disclosure, the method may further include a process of determining whether coordinate information about the at least one touch event is included in an edge area of the touch panel unit.

According to various embodiments of the present disclosure, when coordinate information about the at least one touch event is included in an edge area of the touch panel unit, the method may further include a process of differently setting a reference that recognizes that a ghost touch has occurred in a non-edge area of the touch panel unit and a reference that recognizes that a ghost touch has occurred in an edge area of the touch panel unit.

According to various embodiments of the present disclosure, a process of recognizing that the ghost touch has occurred may include a process of recognizing that the ghost touch has occurred in a superordinate stage than that of firmware.

As described above, in the electronic device, by detecting a ghost touch through monitoring a touch event occurring in a touch panel unit and by removing the ghost touch through performing initialization and calibration of the touch panel unit, the electronic device can reduce a touch erroneous operation that may occur in the touch panel unit.

It will be appreciated that embodiments of the present disclosure according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which, when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable, or in the form of memory, such as, Random Access Memory (RAM), memory chips, devices or integrated circuits, or on an optically or magnetically readable medium, such as, a Compact Disc (CD), Digital Video Disc (DVD), magnetic disk, magnetic tape, and the like. It will be appreciated that the storage devices and storage media are embodiments of machine-readable storage that are suitable for storing a program or programs comprising instructions that, when executed, implement embodiments of the present disclosure.

Accordingly, embodiments of the present disclosure provide a program comprising code for implementing apparatus or a method as claimed in any one of the claims of this specification and a machine-readable storage storing such a program. Further, such programs may be conveyed electronically via any medium such as a communication signal carried over a wired or wireless connection and embodiments suitably encompass the same.

While the present disclosure has been particularly shown and described with reference to embodiments thereof, it will be understood by those skilled in the art that various changes in form and details may be made therein without departing from the spirit and scope of the present disclosure as defined by the appended claims and their equivalents.

## Claims

1. A method of controlling a touch event in an electronic device, the method comprising:
receiving at least one touch event occurring in a touch panel unit;
recognizing that a ghost touch has occurred based on time information and coordinate information of the received at least one touch event; and
performing at least one of initialization or calibration of the touch panel unit, when recognizing that a ghost touch has occurred.

2. The method of claim 1, wherein recognizing that the ghost touch has occurred comprises recognizing that the ghost touch has occurred based on a number of times in which a touch press and a touch release are repeatedly input, when a repeated input of the touch press and the touch release is detected.

3. The method of claim 1, wherein recognizing that the ghost touch has occurred comprises recognizing that the ghost touch has occurred based on a time in which a touch press is maintained, when a touch release is not detected after the touch press is detected.

4. The method of claim 1, wherein recognizing that the ghost touch has occurred comprises recognizing that the ghost touch has occurred based on a number of times in which a touch move is repeatedly input, when a repeated input of the touch move is detected after a touch press is detected.

5. The method of claim 1, further comprising differently setting a first reference that recognizes that the ghost touch has occurred in a non-edge of the touch panel unit and a second reference that recognizes that the ghost touch has occurred in the edge area of the touch panel unit, when the coordinate information about the at least one touch event is included in the edge area of the touch panel unit.

6. The method of claim 1, wherein recognizing that the ghost touch has occurred comprises recognizing that the ghost touch has occurred in a superordinate stage than that of firmware.

7. An electronic device, comprising:
at least one processor;
at least one memory;
at least one touch panel unit; and
at least one program stored in the at least one memory and to be executed by the at least one processor,
wherein the processor is configured to receive at least one touch event occurring at the touch panel unit, to recognize that a ghost touch has occurred based on time information and coordinate information about the at least one touch event, and to perform at least one of initialization or calibration of the touch panel unit, when recognizing that a ghost touch has occurred.

8. The electronic device of claim 7 or the method of claim 1, wherein the at least one touch event comprises at least one of a touch press, a touch release, and a touch move.

9. The electronic device of claim 7 or the method of claim 1, wherein the initialization comprises re-booting of an Integrated Circuit (IC) included in the touch panel unit

10. The electronic device of claim 7, wherein the processor is configured to recognize that the ghost touch has occurred based on a number of times in which a touch press and a touch release are repeatedly input, when a repeated input of the touch press and the touch release is detected.

11. The electronic device of claim 7, wherein the processor is configured to recognize that the ghost touch has occurred based on a time in which a touch press is maintained, when a touch release is not detected after the touch press is detected.

12. The electronic device of claim 7, wherein the processor is configured to recognize that the ghost touch has occurred based on a number of times in which a touch move is repeatedly input, when a repeated input of the touch move is detected after a touch press is detected.

13. The electronic device of claim 7, wherein the processor is configured to determine whether coordinate information about the at least one touch event is included in an edge area of the touch panel unit.

14. The electronic device of claim 13, wherein the processor is configured to differently set a first reference that recognizes that the ghost touch has occurred in a non-edge area of the touch panel unit and a second reference that recognizes that the ghost touch has occurred in the edge area of the touch panel unit, when the coordinate information corresponding to the at least one touch event is included in the edge area of the touch panel unit.

15. The electronic device of claim 7, wherein the processor is configured to recognize that the ghost touch has occurred in a superordinate stage than that of firmware.
